# EUROPEAN PATENT APPLICATION

(11) **EP 4 542 686 A1**
(43) Date of publication of application: **23.04.2025**
(21) Application number: 23824004.8
(22) Date of filing: 16.06.2023
(51) Int. Cl.: H01M 4/62, H01M 4/13, H01M 10/052, H01M 10/0562

(54) **SECONDARY BATTERY**

(30) Priority: 17.06.2022 JP 2022098309
(71) Applicant: TOYOTA JIDOSHA KABUSHIKI KAISHA, Toyota-shi Aichi 471-8571 (JP); DAIKIN INDUSTRIES, LTD., Osaka-shi, Osaka 530-0001 (JP)
(72) Inventor: NOMOTO, Kazushige, Toyota-shi, Aichi 471-8571 (JP); NISHIMURA, Hideaki, Toyota-shi, Aichi 471-8571 (JP); MIZUNO, Fuminori, Toyota-shi, Aichi 471-8571 (JP); HIRAGA, Kentaro, Osaka-shi, Osaka 530-0001 (JP); YAMADA, Takaya, Osaka-shi, Osaka 530-0001 (JP); SUGIYAMA, Akinari, Osaka-shi, Osaka 530-0001 (JP)
(74) Representative: J A Kemp LLP
(86) International application number: PCT/JP2023/022418
(87) International publication number: WO 2023/243714

(57) **Abstract**

Disclosed is a technology for reducing the resistance of a secondary battery including a sulfide solid electrolyte. The secondary battery of the present disclosure includes a first electrode, an electrolyte layer, and a second electrode, wherein at least one of the first electrode and the electrolyte layer contains a sulfide solid electrolyte, and the first electrode contains a perfluoropolyether represented:

E₁-Rf₁-R^{F}-O-Rf₂-E₂ (1)

where Rf₁ and Rf₂ are each independently a C1-16 divalent alkylene group which may be substituted with one or more fluorine atoms, E₁ and E₂ are each independently a monovalent group selected from the group consisting of a fluorine group, a hydrogen group, a hydroxyl group, an aldehyde group, a carboxylic acid group, a C₁₋₁₀ alkyl ester group, an amide group which may have one or more substituents, and an amino group which may have one or more substituents, and R^{F} is a divalent fluoropolyether group.

## Description

### FIELD

The present invention relates to a secondary battery

### BACKGROUND

Patent Literature 1 discloses that, when producing a secondary battery, the electrodes and electrolyte layer are pressed at 200 MPa or more and 1000 MPa or less. Patent Literature 2 discloses that an insulating layer is disposed on the periphery of electrodes to suppress cracking of the electrolyte layer during high-pressure pressing. Patent Literature 3 discloses a perfluoropolyether as an additive component of a non-aqueous electrolytic solution. Patent Literature 4 discloses that a perfluoropolyether group-containing compound is present on the surface of an electrode to improve the storage stability of the electrode.

### [CITATION LIST]

### [PATENT LITERATURE]

[PTL 1] WO 2014/010042
[PTL 2] WO 2019/103008
[PTL 3] Japanese Unexamined Patent Publication No. 2018-200866
[PTL 4] Japanese Unexamined Patent Publication No. 2018-147887

### SUMMARY

### [TECHNICAL PROBLEM]

It is believed that when producing a secondary battery, the resistance of the electrodes and the like can be reduced by pressing the electrodes and the like at high pressure. In particular, it is believed that when producing a secondary battery containing a sulfide solid electrolyte, the effect of reducing resistance by high pressure pressing is remarkable. Conversely, in order to simplify the secondary battery production process and reduce production costs, it is necessary to press the electrodes and the like at low pressure. However, when a low-pressure press is used during production of a secondary battery containing a sulfide solid electrolyte, it is difficult to obtain the above effect of reducing resistance. In this regard, a new technology for reducing the resistance of a secondary battery containing a sulfide solid electrolyte is needed.

### [SOLUTION TO PROBLEM]

As means for solving the problem described above, the present disclosure provides the following plurality of aspects.

### <Aspect 1>

A secondary battery, comprising a first electrode, an electrolyte layer, and a second electrode, wherein
at least one of the first electrode and the electrolyte layer contains a sulfide solid electrolyte, and
the first electrode contains a perfluoropolyether represented by formula (1) below:

   E₁-Rf₁-R^{F}-O-Rf₂-E₂ (1)
where Rf₁ and Rf₂ are each independently a C₁₋₁₆ divalent alkylene group which may be substituted with one or more fluorine atoms,
E₁ and E₂ are each independently a monovalent group selected from the group consisting of a fluorine group, a hydrogen group, a hydroxyl group, an aldehyde group, a carboxylic acid group, a C1-10 alkyl ester group, an amide group which may have one or more substituents, and an amino group which may have one or more substituents, and
R^{F} is a divalent fluoropolyether group.

### <Aspect 2>

The secondary battery according to Aspect 1, wherein
R^{F} is a group represented by formula (2):

   -(OC₆F12)ₐ-(OC₅F₁₀)_{b}-(OC₄F₈)_{c}-(OC₃R^{Fa}₆)_{d}-(OC₂F₄)ₑ-(OCF₂)_{f}- (2)
each R^{Fa} is independently a hydrogen atom, a fluorine atom, or a chlorine atom,
a, b, c, d, e, and f are each independently an integer of 0 to 200,
the sum of a, b, c, d, e, and f is 1 or more,
the order of occurrence of each repeating unit enclosed in parentheses with the subscript a, b, c, d, e, or f is arbitrary in the formula, and
under the proviso that when all R^{Fa} are hydrogen atoms or chlorine atoms, at least one of a, b, c, e, and f is 1 or more.

### <Aspect 3>

The secondary battery according to Aspect 2, wherein
each R^{Fa} is a fluorine atom.

### <Aspect 4>

The secondary battery according to Aspect 3, wherein
each R^{F} is independently a group represented by formula (2-1), (2-2), (2-3), (2-4), or (2-5) below:

   -(OC₃F₆)_{d}-(OC2F4)ₑ- (2-1)
where d is an integer from 1 to 200, and e is 0 or 1;

   -(OC₄F₈)_{c}-(OC₃F₆)_{d}-(OC₂F₄)ₑ-(OCF₂)_{f}- (2-2)
where c and d are each independently an integer of 0 to 30,
e and f are each independently an integer of 1 to 200,
the sum of c, d, e, and f is an integer of 10 to 200, and
the order of occurrence of each repeating unit enclosed in parentheses with the subscript c, d, e or f is arbitrary in the formula;

   -(R₆-R₇)g- (2-3)
where R₆ is OCF₂ or OC2F₄,
R₇ is a group selected from OC2F₄, OC₃F₆, OC₄F₈, OC₅F₁₀, and OC₆F₁₂, or a combination of two or three groups selected from these groups, and
g is an integer of 2 to 100;

   -(OC₆F12)ₐ-(OC₅F10)b-(OC₄FS)_{c}-(OC₃F₆)d-(OC₂F4)ₑ-(OCF2)_{f}- (2-4)
where e is an integer of 1 or more and 200 or less,
a, b, c, d, and f are each independently an integer of 0 or more and 200 or less, and
the order of occurrence of each repeating unit enclosed in parentheses with the subscript a, b, c, d, e, or f is arbitrary in the formula; and

   -(OC₆F₁₂)ₐ-(OC₅F₁₀)b-(OC₄F₈)_{c}-(OC₃F₆)d-(OC₂F₄)ₑ-(OCF₂)_{f}- (2-5)

   where f is an integer of 1 or more and 200 or less,
   a, b, c, d, and e are each independently an integer of 0 or more and 200 or less, and
   the order of occurrence of each repeating unit enclosed in parentheses with the subscript a, b, c, d, e, or f is arbitrary in the formula.

### <Aspect 5>

The secondary battery according to Aspect 4, wherein
each R^{F} is a group represented by formula (2-6) below:

   -(OCF₂CF₂CF₂)ₐ-(OCF(CF₃)CF₂)_{b}-(OCF₂CF(CF₃))_{c}-(OCF₂CF₂)d-(OCF(CF₃))ₑ-(OCF₂)_{f}- (2-6)
where a, b, c, d, e, and f are each independently an integer of 0 to 200,
the sum of a, b, c, d, e, and f is 1 or more, and
the order of occurrence of each repeating unit enclosed in parentheses with the subscript a, b, c, d, e, or f is arbitrary in the formula.

### <Aspect 6>

The secondary battery according to Aspect 4, wherein
each R^{F} is a group represented by formula (2-7) below:

   -(OCF₂CF₂)d-(OCF(CF₃))ₑ-(OCF₂)_{f}- (2-7)
where d, e, and f are each independently an integer of 0 to 200,
the sum of d, e, and f is 1 or more, and
the order of occurrence of each repeating unit enclosed in parentheses with the subscript d, e, or f is arbitrary in the formula.

### <Aspect 7>

The secondary battery according to any one of Aspects 1 to 6, wherein
E₁-Rf₁ and E₂-Rf₂ are each independently a group selected from the group consisting of - CF₃, -CF₂CF₃, and -CF₂CF₂CF₃.

### <Aspect 8>

The secondary battery according to any one of Aspects 1 to 7, wherein
the first electrode comprises a first active material layer, and
the first active material layer contains 1 vol% or more and 25 vol% or less of the perfluoropolyether.

### <Aspect 9>

The secondary battery according to any one of Aspects 1 to 8, wherein
the first electrode is a positive electrode.

### <Aspect 10>

The secondary battery according to any one of Aspects 1 to 9, wherein
the first electrode contains the sulfide solid electrolyte and the perfluoropolyether.

### [EFFECTS OF INVENTION]

The secondary battery of the present disclosure is likely to have low resistance.

### BRIEF DESCRIPTION OF DRAWINGS

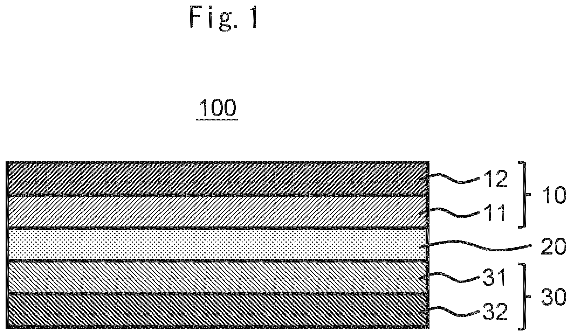

FIG. 1 schematically shows an example of a secondary battery configuration.

### DESCRIPTION OF EMBODIMENTS

### 1. Secondary Battery

Embodiments of the technology of the present disclosure will be described below, but the technology of the present disclosure is not limited to the following embodiments. As shown in FIG. 1, a secondary battery 100 according to an embodiment comprises a first electrode 10, an electrolyte layer 20, and a second electrode 30. At least one of the first electrode 10 and the electrolyte layer 20 contains a sulfide solid electrolyte. Furthermore, the first electrode 10 contains a perfluoropolyether represented by the following formula (1).

### 1.1 First Electrode

The first electrode 10 may be a positive electrode or a negative electrode. When the first electrode 10 is a positive electrode, the second electrode 30 is a negative electrode. The first electrode 10 may have various configurations as long as it contains a specific perfluoropolyether and can function appropriately as a positive electrode or a negative electrode of a secondary battery. For example, when the first electrode 10 contains a sulfide solid electrolyte and a specific perfluoropolyether (for example, when the first active material layer 11 contains a sulfide solid electrolyte and a specific perfluoropolyether), a greater effect is likely to be obtained.

### 1.1.1 Perfluoropolyether (PFPE)

The first electrode 10 contains a perfluoropolyether (PFPE) represented by the following formula (1).

According to the new findings of the present inventors, the sulfide solid electrolyte which may be contained in the electrode or electrolyte layer has high chemical reactivity and may react with other materials, thereby changing or deteriorating. In this case, the ionic conductivity of the electrode or the electrolyte layer is likely to decrease. In contrast, the specific PFPE contained in the first electrode 10 can impart lubricity to various battery materials and has low reactivity with the sulfide solid electrolyte. Specifically, when the specific PFPE is contained in the first electrode 10, even when the first electrode 10 is pressed at a low pressure, the density of the material in the first electrode 10 can be increased due to the lubricating effect of the PFPE. In other words, the filling rate of the material of the first electrode 10 is increased, whereby the resistance of the first electrode 10 can easily be reduced.

Furthermore, according to the new findings of the present inventors, PFPE has a high affinity for the surfaces of various battery materials because of the ether bond thereof, and it is believed that PFPE can be appropriately present in, for example, the gaps between the active materials or the gaps between the sulfide solid electrolyte materials. This further enhances the lubricating effect in the first electrode 10, and even when the first electrode 10 is pressed at a low pressure, it becomes easier to further increase the density of the material of the first electrode 10, whereby it becomes easier to further reduce the resistance of the first electrode 10.

The perfluoropolyether is represented by the following formula (1).

E₁-Rf₁-R^{F}-O-Rf₂-E₂ (1)

where Rf₁ and Rf₂ are each independently a C₁₋₁₆ divalent alkylene group which may be substituted with one or more fluorine atoms,
E₁ and E₂ are each independently a monovalent group selected from the group consisting of a fluorine group, a hydrogen group, a hydroxyl group, an aldehyde group, a carboxylic acid group, a C1-10 alkyl ester group, an amide group which may have one or more substituents, and an amino group which may have one or more substituents, and
R^{F} is a divalent fluoropolyether group.

In the above formula (1), Rf₁ and Rf₂ each independently represent a C1-16 divalent alkylene group optionally substituted with one or more fluorine atoms.

In one aspect, the "C1-16 divalent alkylene group" in the above-mentioned C1-16 divalent alkylene group optionally substituted by one or more fluorine atoms may be a straight chain or a branched chain, preferably a straight chain or branched chain C₁₋₆ alkylene group, particularly a C1-3 alkylene group, more preferably a straight chain C1-6 alkylene group, and particularly a C₁₋₃ alkylene group.

In an aspect, the "C1-16 divalent alkylene group" in the above-mentioned C1-16 divalent alkylene group optionally substituted by one or more fluorine atoms may be linear or branched, and is preferably a linear or branched C₁₋₆ fluoroalkylene group, in particular a C₁₋₃ fluoroalkylene group, specifically, -CF₂CH₂- and -CF₂CF₂CH₂-, and more preferably a linear C₁₋₆ perfluoroalkylene group, in particular a C₁₋₃ perfluoroalkylene group, and specifically, a group selected from the group consisting of -CF₂-, -CF₂CF₂- and -CF₂CF₂CF₂ -.

In the above formula (1), E₁ and E₂ are each independently a monovalent group selected from the group consisting of a fluorine group, a hydrogen group, a hydroxyl group, an aldehyde group, a carboxylic acid group, a C₁₋₁₀ alkyl ester group, an amide group which may have one or more substituents, and an amino group which may have one or more substituents.

The PFPE has low reactivity with the sulfide solid electrolyte. Thus, even when the PFPE comes into contact with the sulfide solid electrolyte, ion conductivity is unlikely to decrease due to change or deterioration of the sulfide solid electrolyte. In particular, when the first electrode contains a PFPE having a non-polar group as an end group, even greater effects can be expected. In this regard, the E₁ and E₂ are each independently preferably a fluorine group. In an aspect, E₁-Rf₁ and E₂-Rf₂ may each independently be a group selected from the group consisting of - CF₃, -CF₂CF₃, and -CF₂CF₂CF₃.

In formula (1) described above, each R^{F}is independently a divalent fluoropolyether group.
each R^{F} is preferably a group represented by formula (2):

   -(OC₆F₁₂)ₐ-(OC₅F10)_{b}-(OC₄F₈)_{c}-(OC₃R^{Fa}₆)d-(OC₂F₄)ₑ-(OCF₂)_{f}- (2)
each R^{Fa} is independently a hydrogen atom, a fluorine atom, or a chlorine atom,
a, b, c, d, e, and f are each independently an integer of 0 to 200,
the sum of a, b, c, d, e, and f is 1 or more,
the order of occurrence of each repeating unit enclosed in parentheses with the subscript a, b, c, d, e, or f is arbitrary in the formula, and
under the proviso that when all R^{Fa} are hydrogen atoms or chlorine atoms, at least one of a, b, c, e, and f is 1 or more.

R^{Fa} is preferably a hydrogen atom or a fluorine atom, and more preferably a fluorine atom.

a, b, c, d, e and f may preferably each independently be an integer from 0 to 100.

The sum of a, b, c, d, e, and f is preferably 5 or more, more preferably 10 or more, and may be, for example, 15 or more or 20 or more. The sum of a, b, c, d, e, and f is preferably 200 or less, more preferably 100 or less, and further preferably 60 or less, and may be, for example, 50 or less or 30 or less.

These repeating units may be linear or branched. For example:
-(OC6F₁₂)- may be any of -(OCF₂CF₂CF₂CF₂CF₂CF₂)-, -(OCF(CF₃)CF₂CF₂CF₂CF₂)-, - (OCF₂CF(CF₃)CF₂CF₂CF₂)-, -(OCF₂CF₂CF(CF₃)CF₂CF₂)-, -(OCF₂CF₂CF₂CF(CF₃)CF₂)-, and -(OCF₂CF₂CF₂CF₂CF(CF₃))-.
-(OC₅F10)- may be any of -(OCF₂CF₂CF₂CF₂CF₂CF₂)-, -(OCF(CF₃)CF₂CF₂CF₂CF₂)-, - (OCF₂CF(CF₃)CF₂CF₂)-, -(OCF₂CF₂CF(CF₃)CF₂)-, and -(OCF₂CF₂CF₂CF(CF₃))-.
-(OC₄F₈)- may be any of -(OCF₂CF₂CF₂CF₂)-, -(OCF(CF₃)CF₂CF₂)-, - (OCF₂CF(CF₃)CF₂)-, -(OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)-, and -(OCF₂CF(C₂F5))-.
-(OC3F₆)- (i.e., the case in which R^{Fa} is a fluorine atom in formula (2) above) may be any of -(OCF₂CF₂CF₂)-, -(OCF(CF₃)CF₂)-, and -(OCF₂CF(CF₃))-.
-(OC₂F₄)- may be either -(OCF₂CF₂)- or -(OCF(CF₃))-.

In an aspect, each R^{F} may independently be a group represented by any one of the following formulas (2-1) to (2-5).

-(OC₃F₆)d-(OC₂F₄)ₑ- (2-1)

where d is an integer from 1 to 200, and e is 0 or 1.

-(OC₄F₈)_{c}-(OC₃F₆)_{d}-(OC₂F₄)ₑ-(OCF₂)_{f}- (2-2)

where c and d are each independently an integer of 0 to 30,
e and f are each independently an integer of 1 or more and 200 or less,
the sum of c, d, e, and f is 2 or more, and
the order of occurrence of each repeating unit enclosed in parentheses with the subscript c, d, e or f is arbitrary in the formula.

-(R₆-R₇)_{g}- (2-3)

where R₆ is OCF₂ or OC2F₄,
R₇ is a group selected from OC2F₄, OC₃F₆, OC₄F₈, OC₅F₁₀, and OC₆F₁₂, or a combination of two or three groups selected from these groups, and
g is an integer of 2 to 100.

-(OC6F12)ₐ-(OC₅F₁₀)_{b}-(OC₄F₈)_{c}-(OC₃F₆)_{d}-(O_{C}2F₄)ₑ-(OCF₂)_{f}- (2-4)

where e is an integer of 1 or more and 200 or less,
a, b, c, d, and f are each independently an integer of 0 or more and 200 or less, and
the order of occurrence of each repeating unit enclosed in parentheses with the subscript a, b, c, d, e, or f is arbitrary in the formula.

-(OC₆F12)ₐ-(OC₅F₁₀)_{b}-(OC₄F₈)_{c}-(OC₃F₆)d-(OC₂F₄)ₑ-(OCF₂)_{f}- (2-5)

where f is an integer of 1 or more and 200 or less,
a, b, c, d, and e are each independently an integer of 0 or more and 200 or less, and
the order of occurrence of each repeating unit enclosed in parentheses with the subscript a, b, c, d, e, or f is arbitrary in the formula.

In formula (2-1) above, d is preferably an integer of 5 to 200, more preferably 10 to 100, further preferably 15 to 50, and is, for example, an integer of 25 to 35. Formula (2-1) above is preferably a group represented by -(OCF₂CF₂CF₂)_{d}- or -(OCF(CF₃)CF₂)_{d}-, and more preferably a group represented by -(OCF₂CF₂CF₂)_{d} -. In an aspect, e is 0. In another aspect, e is 1.

In formula (2-2) above, e and f are each independently an integer of preferably 5 to 200, and more preferably 10 to 200. The sum of c, d, e, and f is preferably 5 or more, more preferably 10 or more, and may be, for example, 15 or more or 20 or more. In an aspect, formula (2-2) above is preferably a group represented by -(OCF₂CF₂CF₂CF₂)_{c}-(OCF₂CF₂CF₂)d-(OCF₂CF₂)ₑ-(OCF₂)_{f}-. In another aspect, formula (2-2) may be a group represented by -(OC₂F₄)ₑ-(OCF₂)_{f}-.

In formula (2-3) above, R₆ is preferably OC₂F₄. In formula (2-3) above, R₇ is preferably a group selected from OC2F₄, OC₃F₆, and OC₄F₈, or a combination of two or three groups independently selected from these groups, and is more preferably a group selected from OC3F₆ and OC4F₈. The combination of two or three groups independently selected from OC2F₄, OC3F₆ and OC₄F₈ is not particularly limited, and examples thereof include -OC₂F₄OC₃F₆-, - OC₂F₄OC₄F₈-, -OC₃F₆OC₂F₄-, -OC₃F₆OC₃F₆-, -OC₃F₆OC₄F₈-, -OC₄F₈OC₄F₈-, - OC₄F₈OC₃F₆-, -OC₄F₈OC₂F₄-, -OC₂F₄OC₂F₄OC₃F₆-, -OC₂F₄OC₂F₄OC₄F₈-, - OC₂F₄OC₃F₆OC₂F₄-, -OC₂F₄OC₃F₆OC₃F₆-, -OC₂F₄OC₄F₈OC₂F₄-, -OC₃F₆OC₂F₄OC₂F₄-, - OC₃F₆OC₂F₄OC₃F₆-, -OC₃F₆OC₃F₆OC₂F₄-, and -OC₄F₈OC₂F₄OC₂F₄-. In formula (2-3) above, g is preferably an integer of 3 or more, and more preferably 5 or more. g is preferably an integer of 50 or less. In formula (2-3) above, OC2F₄, OC₃F₆, OC₄F₈, OC₅F₁₀, and OC₆F₁₂ may be either linear or branched, and are preferably linear. In this aspect, formula (2-3) above is preferably -(OC₂F₄-OC3F₆)_{g}- or -(OC₂F₄-OC₄F₈)_{g}-.

In formula (2-4) above, e is preferably an integer of 1 or more and 100 or less, and more preferably an integer of 5 or more and 100 or less. The sum of a, b, c, d, e, and f is preferably 5 or more, more preferably 10 or more, for example, 10 or more and 100 or less.

In formula (2-5) above, f is preferably an integer of 1 or more and 100 or less, and more preferably an integer of 5 or more and 100 or less. The sum of a, b, c, d, e, and f is preferably 5 or more, more preferably 10 or more, for example, 10 or more and 100 or less.

In an aspect, each R^{F} is a group represented by formula (2-1).

In an aspect, each R^{F} is a group represented by formula (2-2).

In an aspect, each R^{F} is a group represented by formula (2-3).

In an aspect, each R^{F} is a group represented by formula (2-4).

In an aspect, each R^{F} is a group represented by formula (2-5).

In R^{F}, the ratio of e to f (hereinafter referred to as the "e/f ratio") may be 0.5 to 4, preferably 0.6 to 3, more preferably 0.7 to 2, and further preferably 0.8 to 1.4. By setting the e/f ratio to 4 or less, lubricity and chemical stability are further improved. The smaller the e/f ratio, the greater lubricity is improved. Conversely, by setting the e/f ratio to 0.5 or more, the stability of the compound can be further improved. The greater the e/f ratio, the more the stability of the fluoropolyether structure is improved. In this case, the value of f is preferably 0.8 or more.

In an aspect, each R^{F} may be a group represented by the following formula (2-6):

-(OCF₂CF₂CF₂)ₐ-(OCF(CF₃)CF₂)b-(OCF₂CF(CF₃))_{c}-(OCF₂CF₂)d-(OCF(CF₃))ₑ-(OCF₂)_{f}- (2-6)

where a, b, c, d, e, and f are each independently an integer of 0 to 200,
the sum of a, b, c, d, e, and f is 1 or more, and
the order of occurrence of each repeating unit enclosed in parentheses with the subscript a, b, c, d, e, or f is arbitrary in the formula.

In an embodiment, each R^{F} may be a group represented by the following formula (2-7):

-(OCF₂CF₂)d-(OCF(CF₃))ₑ-(OCF₂)_{f}- (2-7)

where d, e, and f are each independently an integer of 0 to 200,
the sum of d, e, and f is 1 or more, and
the order of occurrence of each repeating unit enclosed in parentheses with the subscript d, e, or f is arbitrary in the formula.

In R^{F}, the ratio of d to f (hereinafter referred to as "d/f ratio") may be 0.5 to 4, preferably 0.6 to 3, more preferably 0.7 to 2, and further preferably 0.8 to 1.4. By setting the d/f ratio to 4 or less, lubricity and chemical stability are further improved. The smaller the d/f ratio, the greater lubricity is improved. Conversely, by setting the d/f ratio to 0.5 or more, the stability of the compound can be further improved. The greater the d/f ratio, the more the stability of the fluoropolyether structure is improved. In this case, the value of f is preferably 0.8 or more.

In the fluoropolyether group-containing compound described above, the number average molecular weight of each R^{F} portion is not particularly limited, and is, for example, 500 to 30,000, preferably 1,500 to 30,000, and more preferably 2,000 to 10,000. In the present description, the number average molecular weight of RF is a value measured by ¹⁹F-NMR.

The content of the PFPE in the first electrode 10 is not particularly limited and can be appropriately selected in accordance with the desired performance. In particular, in the case in which the first electrode 10 comprises a first active material layer 11, which will be described later, when the first active material layer 11 contains the PFPE described above in an amount of 1 vol% or more and 25 vol% or less, a greater effect is likely to be obtained. The first active material layer 11 may contain the PFPE described above in an amount of, for example, 1 vol% or more, 3 vol% or more, 5 vol% or more, 7 vol% or more, 8 vol% or more, 9 vol% or more, 10 vol% or more, 11 vol% or more, or 12 vol% or more, and 25 vol% or less, 24 vol% or less, 22 vol% or less, 20 vol% or less, 18 vol% or less, 16 vol% or less, 14 vol% or less, or 12 vol% or less.

The volume ratio of the PFPE in the first active material layer 11 is measured as follows. Specifically, the volume of the first active material layer 11 is measured in advance using an optical microscope or SEM. The content volume t of the PFPE may be identified by washing the first active material layer 11 with a solvent (a solvent capable of dissolving the PFPE without dissolving other electrode materials), recovering the filtrate in which the PFPE is dissolved by suction filtration or the like, and analyzing the recovered solvent by GC-MS. In the case where the solvent has a boiling point significantly different from that of the PFPE, the PFPE may be extracted by distillation and the volume of the PFPE may be directly measured. In this manner, the volume ratio of the PFPE to the volume of the entirety of the first active material layer 11 measured in advance is calculated.

### 1.1.2 First Active Material Layer

As shown in FIG. 1, the first electrode 10 may comprise a first active material layer 11 and a first current collector 12. In this case, the first active material layer 11 may contain the PFPE described above. The first active material layer 11 may be a positive electrode active material layer or a negative electrode active material layer. When the first active material layer 11 is a positive electrode active material layer, the second active material layer 31 is a negative electrode active material layer.

The positive electrode active material layer contains at least a positive electrode active material in addition to the PFPE described above. The positive electrode active material layer may also contain an electrolyte, a conductive aid, a binder, etc. The positive electrode active material layer may also contain various other additives. The content of each component in the positive electrode active material layer may be appropriately determined in accordance with the desired battery performance. For example, when the total solid content of the positive electrode active material layer is 100 mass%, the content of the positive electrode active material may be 40 mass% or more, 50 mass% or more, 60 mass% or more, or 70 mass% or more, and may be 100 mass% or less, 95 mass% or less, or 90 mass% or less. Alternatively, when the total positive electrode active material layer is 100 vol%, the PFPE, the positive electrode active material, and optionally the electrolyte, the conductive aid, and the binder may be a total of 85 vol% or more, 90 vol% or more, or 95 vol% or more, and the remainder may be voids or other components. The shape of the positive electrode active material layer is not particularly limited, and may be, for example, a sheet-like positive electrode active material layer having a substantially flat surface. The thickness of the positive electrode active material layer is not particularly limited, and may be, for example, 0.1 µm or more, 1 µm or more, or 10 µm or more, and may be 2 mm or less, 1 mm or less, or 500 µm or less.

As the positive electrode active material, a material which is known as a positive electrode active material for secondary batteries may be used. Among known active materials, a material having a relatively noble potential (charge/discharge potential) for absorbing and releasing predetermined carrier ions (for example, lithium ions) can be used as the positive electrode active material, and a material having a relatively basic potential can be used as the negative electrode active material, which will be described later. The positive electrode active material may be at least one selected from, for example, various lithium-containing compounds, elemental sulfur, and sulfur compounds. The lithium-containing compound as the positive electrode active material may be any of various lithium-containing oxides such as lithium cobalt oxide, lithium nickel oxide, Li_{1±α}Ni_{1/3}Co_{1/3}Mn_{1/3}O_{2±δ}, lithium manganate, spinel-based lithium compounds (such as Li₁₊ₓMn_{2-x-y}M_{y}O₄ (where M is one or more selected from Al, Mg, Co, Fe, Ni, and Zn) substituted Li-Mn spinels), lithium titanate, and lithium metal phosphate (such as LiMPO₄, where M is one or more selected from Fe, Mn, Co, and Ni). In particular, when the positive electrode active material contains a lithium-containing oxide containing at least Li, at least one of Ni, Co, and Mn, and O as constituent elements, a greater effect can be expected. These positive electrode active materials may be used alone or in combination of two or more types thereof.

The shape of the positive electrode active material may be any shape which is common for the positive electrode active material of a battery. The positive electrode active material may be, for example, particulate. The positive electrode active material may be hollow, have voids, or be porous. The positive electrode active material may be primary particles or secondary particles formed by agglomeration of a plurality of primary particles. The average particle diameter D50 of the positive electrode active material may be, for example, 1 nm or more, 5 nm or more, or 10 nm or more, and may be 500 µm or less, 100 µm or less, 50 µm or less, or 30 µm or less. Note that as used herein, the average particle diameter D50 is the particle diameter (median diameter) at an integrated value of 50% in a volume-based particle size distribution obtained by a laser diffraction/scattering method.

A protective layer containing an ion-conductive oxide may be formed on the surface of the positive electrode active material. As a result, the reaction between the positive electrode active material and a sulfide (for example, a sulfide solid electrolyte, which will be described later) can more easily be suppressed. Examples of ion-conductive oxides include Li₃BO₃, LiBO₂, Li₂CO₃, LiAlO2, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO3, Li₂MoO₄, and Li₂WO₄. The ion-conductive oxide may have some elements substituted with doping elements such as P and B. The coverage (area ratio) of the protective layer to the surface of the positive electrode active material may be, for example, 70% or more, 80% or more, or 90% or more. The thickness of the protective layer may be, for example, 0.1 nm or more or 1 nm or more, and may be 100 nm or less or 20 nm or less.

The electrolyte which may be contained in the positive electrode active material layer may be a solid electrolyte, a liquid electrolyte (electrolytic solution), or a combination of these. In particular, when the positive electrode active material layer contains at least a solid electrolyte as the electrolyte, and in particular, when the positive electrode active material layer does not contain any liquid other than the PFPE described above, a greater effect is likely to be obtained. Furthermore, when the positive electrode contains a sulfide solid electrolyte and the PFPE described above (for example, when the positive electrode active material layer contains a sulfide solid electrolyte and the PFPE described above), a greater effect is likely to be obtained.

The solid electrolyte may be any solid electrolyte which is known for secondary batteries. The solid electrolyte may be an inorganic solid electrolyte or an organic polymer electrolyte. In particular, inorganic solid electrolytes are excellent in ionic conductivity and heat resistance. Examples of inorganic solid electrolytes include oxide solid electrolytes such as lithium lanthanum zirconate, LiPON, Li_{1+X}Al_{X}Ge_{2-X}(PO₄)₃, Li-SiO-based glasses, and Li-Al-S-O-based glasses; and sulfide solid electrolytes such as Li₂S-P₂S₅, Li₂S-SiS₂, LiI-Li₂S-SiS₂, LiI-Si₂S-P₂S₅, Li₂S-P₂S₅-LiI-LiBr, LiI-Li₂S-P₂S₅, LiI-Li₂S-P₂O₅, LiI-Li₃PO₄-P₂S₅, and Li₂S-P₂S₅-GeS. In particular, the performance of the sulfide solid electrolyte, particularly the sulfide solid electrolyte containing at least Li, S and P as constituent elements, is high. The solid electrolyte may be amorphous or crystalline. The solid electrolyte may be, for example, in the form of particles. One type of solid electrolyte may be used alone, or two or more types thereof may be used in combination.

The electrolytic solution may contain predetermined carrier ions (for example, lithium ions). The electrolytic solution may be, for example, a non-aqueous electrolytic solution. The composition of the electrolytic solution may be the same as the known composition of the electrolytic solution of the secondary battery. For example, the electrolytic solution may be a carbonate-based solvent in which a lithium salt is dissolved at a predetermined concentration. Examples of carbonate-based solvents include fluoroethylene carbonate (FEC), ethylene carbonate (EC), and dimethyl carbonate (DMC). Examples of lithium salts include LiPF₆.

Examples of the conductive aid which may be contained in the positive electrode active material layer include carbon materials such as vapor-grown carbon fiber (VGCF), acetylene black (AB), Ketjen black (KB), carbon nanotubes (CNT), and carbon nanofibers (CNF); and metal materials such as nickel, aluminum, and stainless steel. The conductive aid may be, for example, particulate or fibrous, and the size thereof is not particularly limited. One type of conductive aid may be used alone, or two or more types thereof may be used in combination.

Examples of the binder that may be contained in the positive electrode active material layer include butadiene rubber (BR)-based binders, butylene rubber (IIR)-based binders, acrylate butadiene rubber (ABR)-based binders, styrene butadiene rubber (SBR)-based binders, polyvinylidene fluoride (PVdF)-based binders, polytetrafluoroethylene (PTFE)-based binders, and polyimide (PI)-based binders. One type of binder may be used alone, or two or more types thereof may be used in combination.

### 1.1.3 First current collector

As shown in FIG. 1, the first electrode 10 may comprise a first current collector 12 in contact with the first active material layer 11 described above. The first current collector 12 may be a positive current collector or a negative current collector. When the first current collector 12 is a positive current collector, the second current collector 32 is a negative current collector.

The positive electrode current collector may be any which is commonly used as the positive electrode current collector of a battery. The positive electrode current collector may be in the form of a foil, a plate, a mesh, a punched metal, or a foam. The positive electrode current collector may be composed of a metal foil or a metal mesh. In particular, metal foils are excellent in terms of ease of handling. The positive electrode current collector may be composed of a plurality of foils. Examples of metals for constituting the positive electrode current collector include Cu, Ni, Cr, Au, Pt, Ag, Al, Fe, Ti, Zn, Co, and stainless steel. In particular, the positive electrode current collector may contain Al from the viewpoint of ensuring oxidation resistance. The positive electrode current collector may have some type of coating layer on the surface thereof for the purpose of adjusting resistance. The positive electrode current collector may be a metal foil or a substrate on which the metal described above is plated or vapor-deposited. When the positive electrode current collector is composed of a plurality of metal foils, some layers may be present between the plurality of metal foils. The thickness of the positive electrode current collector is not particularly limited. For example, it may be 0.1 µm or more or 1 µm or more, and 1 mm or less or 100 µm or less.

### 1.2 Electrolyte Layer

The electrolyte layer 20 is arranged between the first electrode 10 and the second electrode 30 and can function as a separator. The electrolyte layer 20 contains at least an electrolyte, and may further contain a binder or the like as desired. The electrolyte layer 20 may further contain other components such as a dispersant or the PFPE described above. The content of each component in the electrolyte layer 20 is not particularly limited, and may be appropriately determined in accordance with the desired battery performance. The shape of the electrolyte layer 20 is not particularly limited, and may be, for example, a sheet having a substantially flat surface. The thickness of the electrolyte layer 20 is not particularly limited, and may be, for example, 0.1 µm or more or 1 µm or more, and may be 2 mm or less or 1 mm or less.

### 1.2.1 Electrolytes

The electrolyte contained in the electrolyte layer 20 may be appropriately selected from those exemplified as electrolytes which may be contained in the positive electrode active material layer described above. In particular, an electrolyte layer 20 containing a solid electrolyte, and in particular, a sulfide solid electrolyte, and further a sulfide solid electrolyte containing at least Li, S, and P as constituent elements, has high performance. When the electrolyte is a solid electrolyte, the solid electrolyte may be amorphous or crystalline. When the electrolyte is a solid electrolyte, the solid electrolyte may be, for example, particulate. One type of electrolyte may be used alone, or two or more types thereof may be used in combination.

In the secondary battery 100, the sulfide solid electrolyte described above is contained in at least one of the first electrode 10 and the electrolyte layer 20. Specifically, the PFPE contained in the first electrode 10 can come into contact with at least one of the sulfide solid electrolyte contained in the first electrode 10 and the sulfide solid electrolyte contained in the electrolyte layer 20. In the secondary battery 100, even if the predetermined PFPE described above comes into contact with the sulfide solid electrolyte, change or deterioration of the sulfide solid electrolyte is unlikely to occur, and the high ionic conductivity of the sulfide solid electrolyte is likely to be maintained.

### 1.2.2 Binder

The binder which can be contained in the electrolyte layer 20 may be appropriately selected from, for example, those exemplified as binders which can be contained in the positive electrode active material layer described above.

### 1.3 Second Electrode

The second electrode 30 may be a positive electrode or a negative electrode. When the first electrode 10 is a positive electrode, the second electrode 30 is a negative electrode. The second electrode 30 may be any electrode that can appropriately function as a positive electrode or a negative electrode of a secondary battery, and the configuration thereof is not particularly limited.

### 1.3.1 Second active material layer

As shown in FIG. 1, the second electrode 30 may comprise a second active material layer 31 and a second current collector 32. The second active material layer 31 may or may not contain the predetermined PFPE described above. When the second active material layer 31 contains a predetermined PFPE, the specific configuration thereof may be the same as that of the first active material layer 11. The second active material layer 31 may be a positive electrode active material layer or a negative electrode active material layer. When the first active material layer 11 is a positive electrode active material layer, the second active material layer 31 is a negative electrode active material layer.

The negative electrode active material layer contains at least a negative electrode active material, and may further contain an electrolyte, a conductive aid, a binder, etc. The negative electrode active material layer may also contain various other additives. For example, it may contain the PFPE described above. The content of each component in the negative electrode active material layer may be appropriately determined in accordance with the desired battery performance. For example, when the total solid content of the negative electrode active material layer is 100 mass%, the content of the negative electrode active material may be 40 mass% or more, 50 mass% or more, 60 mass% or more, or 70 mass% or more, and may be 100 mass% or less, 95 mass% or less, or 90 mass% or less. Alternatively, when the total negative electrode active material layer is 100 vol%, the negative electrode active material, and optionally the electrolyte, the conductive aid, the binder, and the PFPE may be a total of 85 vol% or more, 90 vol% or more, or 95 vol% or more, with the remainder being voids or other components. The shape of the negative electrode active material layer is not particularly limited, and may be, for example, a sheet-like negative electrode active material layer having a substantially flat surface. The thickness of the negative electrode active material layer is not particularly limited, and may be, for example, 0.1 µm or more, 1 µm or more, or 10 µm or more, and may be 2 mm or less, 1 mm or less, or 500 µm or less.

As the negative electrode active material, various substances which have a potential (charge/discharge potential) for absorbing and releasing predetermined carrier ions (for example, lithium ions) that is lower than that of the positive electrode active material can be adopted. For example, the negative electrode active material may be at least one selected from silicon-based active materials such as Si, Si alloys, and silicon oxide; carbon-based active materials such as graphite and hard carbon; various oxide-based active materials such as lithium titanate; metallic lithium, lithium alloys, and the like. One type of negative electrode active material may be used alone, or two or more types thereof may be used in combination.

The shape of the negative electrode active material may be a shape which is generally used in the negative electrode active material for a battery. The negative electrode active material may be, for example, particulate. The negative electrode active material may be hollow, may have voids, or may be porous. The negative electrode active material may be primary particles, or may be secondary particles formed by agglomeration of a plurality of primary particles. The average particle diameter D50 of the negative electrode active material may be, for example, 1 nm or more, 5 nm or more, or 10 nm or more, and may be 500 µm or less, 100 µm or less, 50 µm or less, or 30 µm or less. Alternatively, the negative electrode active material may be in the form of a sheet (foil or film) such as a lithium foil. Specifically, the negative electrode active material layer may be composed of a sheet of the negative electrode active material.

The electrolyte which may be contained in the negative electrode active material layer may be a solid electrolyte, a liquid electrolyte (electrolytic solution), or a combination of these. In particular, when the negative electrode active material layer contains at least a solid electrolyte as an electrolyte, a greater effect is likely to be obtained. The negative electrode active material layer may contain a solid electrolyte, particularly a sulfide solid electrolyte, and further, among them, a sulfide solid electrolyte containing Li, S, and P as constituent elements. Examples of the conductive aid which may be contained in the negative electrode active material layer include the carbon materials described above and the metal materials described above. The binder which may be contained in the negative electrode active material layer may be appropriately selected from, for example, those exemplified as binders which may be contained in the positive electrode active material layer described above.

### 1.3.2 Second Current Collector

As shown in FIG. 1, the second electrode 30 may contain a second current collector 32 which is in contact with the second active material layer 31. The second current collector 32 may be a positive current collector or a negative current collector. When the first current collector 12 is a positive current collector, the second current collector 32 is a negative current collector.

The negative electrode current collector may be any which is commonly used as the negative electrode current collector for a battery. The negative electrode current collector may be in the form of a foil, a plate, a mesh, a punched metal, or a foam. The negative electrode current collector may be a metal foil or a metal mesh, or may be a carbon sheet. In particular, metal foils are excellent in terms of ease of handling. The negative electrode current collector may be composed of a plurality of foils or sheets. Examples of metals constituting the negative electrode current collector include Cu, Ni, Cr, Au, Pt, Ag, Al, Fe, Ti, Zn, Co, and stainless steel. In particular, from the viewpoint of ensuring reduction resistance and preventing alloying with lithium, the negative electrode current collector may contain at least one metal selected from Cu, Ni, and stainless steel. The negative electrode current collector may have some type of coating layer on the surface thereof for the purpose of adjusting resistance. Furthermore, the negative electrode current collector may be a metal foil or a substrate on which the metal described above is plated or vapor-deposited. When the negative electrode current collector is composed of a plurality of metal foils, some sort of layer may be present between the plurality of metal foils. The thickness of the negative electrode current collector is not particularly limited. For example, it may be 0.1 µm or more or 1 µm or more, and may be 1 mm or less or 100 µm or less.

### 1.4 Other Configurations

In the secondary battery 100, each of the components described above may be housed inside an exterior body. Any known exterior body for a battery can be used as the exterior body. Furthermore, a plurality of secondary batteries 100 may be electrically connected in any manner and stacked in any manner to form a battery pack. In this case, the battery pack may be housed inside a known battery case. The secondary battery 100 may also comprise other obvious components such as necessary terminals. Examples of the shape of the secondary battery 100 include a coin type, a laminate type, a cylindrical type, and a rectangular type.

### 2. Secondary Battery Production Method

The secondary battery 100 can be produced by adopting a known method. For example, it can be produced as follows. However, the production method for the secondary battery 100 is not limited to the following method, and each layer may be formed by, for example, dry molding or the like.
(1) The negative electrode active material constituting the negative electrode active material layer is dispersed in a solvent to obtain a negative electrode slurry. The solvent used in this case is not particularly limited, and may be water or any of various organic solvents, or may be N-methylpyrrolidone (NMP). Thereafter, the negative electrode slurry is applied to the surface of a negative electrode current collector or an electrolyte layer as described below using a doctor blade or the like, and then dried to form a negative electrode active material layer on the surface of the negative electrode current collector or the electrolyte layer, thereby forming a negative electrode. The negative electrode active material layer may be press-molded.
(2) The positive electrode active material constituting the positive electrode active material layer is dispersed in a solvent to obtain a positive electrode slurry. The solvent used in this case is not particularly limited, and water or any of various organic solvents can be used, and N-methylpyrrolidone (NMP) may also be used. Thereafter, the positive electrode slurry is applied to the surface of a positive electrode current collector or an electrolyte layer as described below using a doctor blade or the like, and then dried to form a positive electrode active material layer on the surface of the positive electrode current collector or the electrolyte layer, thereby forming a positive electrode. The positive electrode active material layer may be press molded.
(3) Each layer is laminated so that the electrolyte layer is interposed between the negative electrode and the positive electrode to obtain a laminate having a negative electrode current collector, a negative electrode active material layer, an electrolyte layer, a positive electrode active material layer, and a positive electrode current collector in this order. The electrolyte layer may be obtained by molding an electrolyte mixture containing, for example, an electrolyte and a binder, or may be obtained by press-molding. The laminate may be further press molded. Other members such as terminals are attached to the laminate as needed.
(4) The laminate is placed in a battery case and sealed to obtain a secondary battery.

By incorporating the PFPE described above into the active material layer in at least one of steps (1) and (2) above, the filling rate of the active material layer can be increased even when the active material layer is press-molded at low pressure, and as a result, a secondary battery having low resistance can be easily obtained.

The technology of the present disclosure also includes an aspect of a method for the production of a secondary battery as described below. Specifically, in an embodiment, the method for the production of the secondary battery 100 of the present disclosure comprises the following steps:
molding a first electrode mixture to obtain a first electrode 10,
molding an electrolyte mixture to obtain an electrolyte layer 20, and
molding a second electrode mixture to obtain a second electrode 30, wherein
at least one of the first electrode mixture and the electrolyte mixture contains a sulfide solid electrolyte,
the first electrode mixture contains a perfluoropolyether represented by formula (1) above, and
during molding of the first electrode mixture, pressure is applied to the first electrode mixture.

The first electrode mixture or the second electrode mixture may contain the materials constituting the positive electrode active material layer or negative electrode active material layer described above, and the electrolyte mixture may contain the materials constituting the electrolyte layer described above. In the production method of the present disclosure, the pressure during molding of the first electrode mixture is not particularly limited. For example, during molding of the first electrode mixture, a pressure of greater than 0 kN/cm and 75 kN/cm or less, 50 kN/cm or less, 25 kN/cm or less, or 15 kN/cm or less may be applied to the first electrode mixture. The means and method for applying pressure to the first electrode mixture are also not particularly limited, and various pressurizing means and pressurizing methods such as roller pressing and CIP can be adopted.

In the above descriptions, the unit of pressure applied to the first electrode mixture is described as "kN/cm", but this is merely exemplary. Specifically, the pressure applied to the first electrode mixture is not limited to linear pressure, and may be surface pressure. Even when the pressure applied to the first electrode mixture is surface pressure, the surface pressure can be converted to linear pressure. The specific conversion method is not particularly limited, and the surface pressure may be converted to linear pressure by experimentally and statistically identifying the relationship between the surface pressure and the linear pressure via various experimentation, or the surface pressure may be theoretically converted to linear pressure via calculation. As far as has been confirmed by the present inventors, for example, when the surface pressure is approximately 37.5 kN/cm, the linear pressure is approximately 75 kN/cm, and when the surface pressure is approximately 7.5 kN/cm, the linear pressure is approximately 15 kN/cm.

### 3. Supplementary Information

The technology of the present disclosure can be applied not only to lithium-ion secondary batteries, but also to secondary batteries other than lithium-ion secondary batteries (for example, sodium-ion secondary batteries). However, when the technology of the present disclosure is applied to lithium-ion secondary batteries, it is likely to exhibit even greater effects.

### EXAMPLES

The technology of the present disclosure will be described in more detail below with reference to Examples, but the technology of the present disclosure is not limited to the following Examples.

### 1. Preparation of Positive Electrode for Pressing

A binder (PVdF), a conductive aid (VGCF), a sulfide solid electrolyte (LiI-LiBr-Li₂S-P₂S₅), a positive electrode active material (LiNi_{0.80}Co_{0.15}Mn_{0.05}O₂), and optionally a perfluoropolyether (PFPE) were added to an organic solvent, and were kneaded using an ultrasonic homogenizer to obtain a positive electrode mixture slurry. The obtained positive electrode mixture slurry was applied onto an Al foil and dried to obtain a positive electrode for pressing. By changing the amount of PFPE added, a plurality of positive electrodes for pressing having different volume fractions of PFPE in the mixture were obtained. The volume fraction of PFPE in each positive electrode for pressing is as shown in Table 1 below. The PFPE was a liquid having a chemical structure represented by the following formula (I) (where m/n is 1.2, the number average molecular weight is 5120, and the terminal R has CF₃ and CF₂CF₃ in an average ratio of 1:0.17).

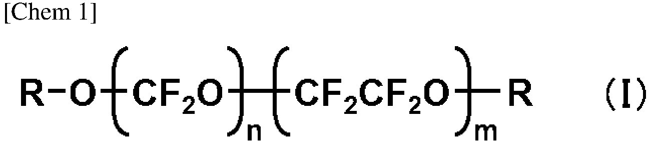

### 2. Preparation of Negative Electrode for Pressing

A binder (PVdF), a conductive aid (VGCF), a sulfide solid electrolyte (LiI-LiBr-Li₂S-P₂S₅), and a negative electrode active material (Si) were added to an organic solvent, and were kneaded using an ultrasonic homogenizer to obtain a negative electrode mixture slurry. The obtained negative electrode mixture slurry was applied onto a Cu foil and dried to obtain a negative electrode for pressing.

### 3. Preparation of Electrolyte Layer for Pressing

A binder (PVdF) and a sulfide solid electrolyte (LiI-LiBr-Li₂S-P₂S₅) were added to an organic solvent and kneaded using an ultrasonic homogenizer to obtain an electrolyte mixture slurry. The obtained electrolyte mixture slurry was applied onto an Al foil and dried to obtain an electrolyte layer for pressing.

### 4. Battery Construction

The positive electrode, negative electrode, and electrolyte layer for pressing were each formed into a rectangular shape, and the mixture surface of the positive electrode for pressing and the mixture surface of the electrolyte layer for pressing were stacked, and then roller-pressed at 165°C at the pressure shown in Table 1 below, and the Al foil of the electrolyte layer for pressing was peeled off to obtain a laminate (A) of Al foil, positive electrode active material layer, and electrolyte layer. The mixture surface of the negative electrode for pressing and the mixture surface of the electrolyte layer for pressing were stacked, and then roller-pressed at 25°C at a pressure of 30 kN/cm, and the Al foil of the electrolyte layer for pressing was peeled off to obtain a laminate (B) of Cu foil, negative electrode active material layer, and electrolyte layer. The laminate (A) was punched to φ 11.28 mm, and the laminate (B) was punched to φ 13.00 mm. An electrolyte layer was further transferred to the laminate (B) using a uniaxial press, and the laminate (A) and the laminate (B) were then stacked to obtain an electrode body having a structure of Al foil/positive electrode active material layer/electrolyte layer/negative electrode active material layer/Cu foil. Current extraction tabs were attached to the Al foil and Cu foil of the electrode body, and the electrode body was sealed in a laminate pack using a vacuum-lami sealer to prepare a battery for evaluation.

### 5. Evaluation of Battery Resistance

The resistance of the battery for evaluation prepared as described above was measured. Specifically, the resistance value of the real axis intercept on the low frequency side of the circular component was read from the Nyquist plot obtained by the AC impedance method, and this was determined as the resistance of the battery.

### 6. Evaluation Results

The evaluation results are shown in Table 1 below. The configurations and preparation conditions of the electrolyte layer and the negative electrode are the same between the Examples and Comparative Examples, and thus, have been omitted from Table 1. The evaluation results of battery resistance are shown relative to the resistance value of Comparative Example 1, which is set as a baseline (100.0).

**[Table 1]**

| | PFPE volume ratio (vol%) | Press pressure (kN/cm) | Battery resistance | |
|---|---|---|---|---|
| | | | - | Resistance reduction effect |
| Comp Ex 1 | 0 | 75 | 100.0 | - |
| Comp Ex 2 | 0 | 50 | 103.7 | 3.7 |
| Comp Ex 3 | 0 | 38 | 127.1 | 27.1 |
| Comp Ex 4 | 0 | 25 | 141.1 | 41.1 |
| Comp Ex 5 | 0 | 13 | 207.5 | 107.5 |
| Ex 1 | 8 | 75 | 99.1 | -0.9 |
| Ex 2 | 8 | 50 | 98.1 | -5.6 |
| Ex 3 | 8 | 38 | 98.1 | -29.0 |
| Ex 4 | 8 | 25 | 100.9 | -40.2 |
| Ex 5 | 8 | 13 | 129.0 | -78.5 |
| Ex 6 | 25 | 25 | 126.2 | -14.9 |
| Ex 7 | 12 | 25 | 106.5 | -34.6 |
| Ex 8 | 3 | 25 | 131.8 | -9.3 |
| Ex 9 | 1 | 25 | 138.3 | -2.8 |

The results shown in Table 1 indicate the following:
(1) As shown in Comparative Examples 1 to 5, the lower the pressure during molding of the positive electrode, the higher the battery resistance. It is considered that when the molding pressure was reduced, the filling rate of the mixture decreased, resulting in an active material layer having many voids, which increased the battery resistance.
(2) As shown in Comparative Examples 1 to 5 and Examples 1 to 5, when the pressure during molding of the positive electrode was the same, the battery resistance was smaller when the mixture contained PFPE (Examples 1 to 5) than when the mixture did not contain PFPE (Comparative Examples 1 to 5). In Examples 1 to 5, it is considered that the lubricating effect of PFPE increased the fluidity of the mixture during molding of the positive electrode, whereby an active material layer having a high filling rate was obtained, resulting in a reduced battery resistance.
(3) As shown in Examples 6 to 9, the resistance of the battery was reduced regardless of the amount (volume ratio) of PFPE added in the mixture.

Though a PFPE having a specific chemical structure is exemplified in the Examples described above, the chemical structure of the PFPE is not limited thereto. Furthermore, though the PFPE is contained in the positive electrode side in the Examples described above, the same effects can be expected even when the PFPE is contained in the negative electrode side. Furthermore, the mixture composition of the positive electrode, electrolyte layer, and negative electrode is not limited to the foregoing.

As described above, a secondary battery having the following features is likely to have a low resistance:
(1) comprising a first electrode, an electrolyte layer, and a second electrode;
(2) at least one of the first electrode and the electrolyte layer contains a sulfide solid electrolyte; and
(3) the first electrode contains a specific perfluoropolyether.

### DESCRIPTION OF REFERENCE SIGNS

- 10: first electrode
- 11: first active material layer
- 12: first current collector
- 20: electrolyte layer
- 30: second electrode
- 31: second active material layer
- 32: second current collector
- 100: secondary battery

## Claims

1. A secondary battery, comprising a first electrode, an electrolyte layer, and a second electrode, wherein
at least one of the first electrode and the electrolyte layer contains a sulfide solid electrolyte and
the first electrode contains a perfluoropolyether represented by formula (1) below:
E₁-Rf₁-R^{F}-O-Rf₂-E₂ (1)
where Rf₁ and Rf₂ are each independently a C₁₋₁₆ divalent alkylene group which may be substituted with one or more fluorine atoms,
E₁ and E₂ are each independently a monovalent group selected from the group consisting of a fluorine group, a hydrogen group, a hydroxyl group, an aldehyde group, a carboxylic acid group, a C1-10 alkyl ester group, an amide group which may have one or more substituents, and an amino group which may have one or more substituents, and
R^{F} is a divalent fluoropolyether group.

2. The secondary battery according to claim 1, wherein
R^{F} is a group represented by formula (2):
-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}- (2)
where each R^{Fa} is independently a hydrogen atom, a fluorine atom, or a chlorine atom,
a, b, c, d, e, and f are each independently an integer of 0 to 200,
the sum of a, b, c, d, e, and f is 1 or more,
the order of occurrence of each repeating unit enclosed in parentheses with the subscript a, b, c, d, e, or f is arbitrary in the formula, and
under the proviso that when all R^{Fa} are hydrogen atoms or chlorine atoms, at least one of a, b, c, e, and f is 1 or more.

3. The secondary battery according to claim 2, wherein
each R^{Fa} is a fluorine atom.

4. The secondary battery according to claim 3, wherein
each R^{F} is independently a group represented by formula (2-1), (2-2), (2-3), (2-4), or (2-5) below:
-(OC₃F₆)d-(OC₂F₄)ₑ- (2-1)
where d is an integer from 1 to 200, and e is 0 or 1;
-(OC₄F₈)_{c}-(OC₃F₆)d-(OC₂F₄)ₑ-(OCF₂)_{f}- (2-2)
where c and d are each independently an integer of 0 to 30,
e and f are each independently an integer of 1 to 200,
the sum of c, d, e, and f is an integer of 10 to 200, and
the order of occurrence of each repeating unit enclosed in parentheses with the subscript c, d, e or f is arbitrary in the formula;
-(R₆-R₇)_{g}- (2-3)
where R₆ is OCF₂ or OC2F₄,
R₇ is a group selected from OC2F₄, OC₃F₆, OC₄F₈, OC₅F₁₀, and OC₆F₁₂, or a combination of two or three groups selected from these groups, and
g is an integer of 2 to 100;
-(OC₆F12)ₐ-(OC₅F₁₀)_{b}-(OC₄F₈)_{c}-(OC₃F6)d-(OC₂F₄)ₑ-(OCF₂)_{f}- (2-4)
where e is an integer of 1 or more and 200 or less,
a, b, c, d, and f are each independently an integer of 0 or more and 200 or less, and
the order of occurrence of each repeating unit enclosed in parentheses with the subscript a, b, c, d, e, or f is arbitrary in the formula; and
-(OC₆F₁₂)ₐ-(OC₅F₁₀)_{b}-(OC₄F₈)_{c}-(OC₃F₆)_{d}-(OC₂F₄)ₑ-(OCF₂)_{f}- (2-5)
where f is an integer of 1 or more and 200 or less,
a, b, c, d, and e are each independently an integer of 0 or more and 200 or less, and
the order of occurrence of each repeating unit enclosed in parentheses with the subscript a, b, c, d, e, or f is arbitrary in the formula.

5. The secondary battery according to claim 4, wherein
each R^{F} is a group represented by formula (2-6) below:
-(OCF₂CF₂CF₂)ₐ-(OCF(CF₃)CF₂)_{b}-(OCF₂CF(CF₃))_{c}-(OCF₂CF₂)_{d}-(OCF(CF₃))ₑ-(OCF₂)_{f}- (2-6)
where a, b, c, d, e, and f are each independently an integer of 0 to 200,
the sum of a, b, c, d, e, and f is 1 or more, and
the order of occurrence of each repeating unit enclosed in parentheses with the subscript a, b, c, d, e, or f is arbitrary in the formula.

6. The secondary battery according to claim 4, wherein
each R^{F} is a group represented by formula (2-7) below:
-(OCF₂CF₂)_{d}-(OCF(CF₃))ₑ-(OCF₂)_{f}- (2-7)
where d, e, and f are each independently an integer of 0 to 200,
the sum of d, e, and f is 1 or more, and
the order of occurrence of each repeating unit enclosed in parentheses with the subscript d, e, or f is arbitrary in the formula.

7. The secondary battery according to any one of claims 1 to 6, wherein
E₁-Rf₁ and E₂-Rf₂ are each independently a group selected from the group consisting of - CF₃, -CF₂CF₃, and -CF₂CF₂CF₃.

8. The secondary battery according to any one of claims 1 to 7, wherein
the first electrode comprises a first active material layer, and
the first active material layer contains 1 vol% or more and 25 vol% or less of the perfluoropolyether.

9. The secondary battery according to any one of claims 1 to 8, wherein
the first electrode is a positive electrode.

10. The secondary battery according to any one of claims 1 to 9, wherein
the first electrode contains the sulfide solid electrolyte and the perfluoropolyether.
